# EUROPÄISCHE PATENTSCHRIFT

(11) **EP 1 677 925 B1**
(45) Veröffentlichungstag und Bekanntmachung des Hinweises auf die Patenterteilung: **19.03.2008**
(21) Anmeldenummer: 04790414.9
(22) Anmeldetag: 14.10.2004
(51) Int. Cl.: B21D 39/03, B29C 45/14, F16B 17/00

(54) **VERFAHREN UND WERKZEUG ZUR HERSTELLUNG EINES HYBRIDBAUTEILS**
METHOD AND DEVICE FOR PRODUCING A HYBRID COMPONENT
PROCEDE ET DISPOSITIF DE FABRICATION D'UNE COMPOSANTE HYBRIDE

(30) Priorität: 21.10.2003 DE 10349430
(43) Veröffentlichungstag der Anmeldung: 12.07.2006
(73) Patentinhaber: Behr GmbH & Co. KG, 70469 Stuttgart (DE)
(72) Erfinder: WOLF, Walter, 71570 Oppenweiler-Zell (DE)
(86) Internationale Anmeldenummer: PCT/EP2004/011558
(87) Internationale Veröffentlichungsnummer: WO 2005/042182

(56) Entgegenhaltungen:
- DE-A- 10 160 242
- DE-A- 19 918 516
- US-A- 5 842 265

## Beschreibung

Die Erfindung bezieht sich auf ein Verfahren zur Herstellung eines Hybridbauteils; das ein erstes Blechteil, ein zweites Blechteil und ein Kunststoffteil umfasst. Die Erfindung bezieht sich weiterhin auf ein Spritz- und Fügewerkzeug zur Herstellung des genannten Hybridbauteils.

Als Hybridbauteil wird allgemein ein Bauteil verstanden, das aus mehreren fest miteinander verbundenen Teilen unterschiedlichen Materials, insbesondere Metall und Kunststoff, gebildet ist. Solche Hybridbauteile finden aufgrund ihres vergleichsweise geringen Gewichts bei gleichzeitig hoher Stabilität in der Leichtbautechnik, insbesondere bei einer Fahrzeugkonstruktion, vielfach Verwendung. Der Begriff Blech umfasst hierbei sowohl Metallblech als auch blechartige Strukturen aus anderem Material wie beispielsweise faserverstärktem Kunststoff.

Bei der Herstellung eines Blech- und Kunststoffteile umfassenden Hybridbauteils ist es üblich, das oder die Kunststoffteile an einem bestehenden Grundkörper aus Blech anzuspritzen. Um gute Festigkeits- und Steifigkeitseigenschaften des Hybridbauteils zu erreichen, ist hierbei aus der EP 0 373 342 B1 bekannt, den Grundkörper an diskreten Verbindungsstellen mit Durchbrüchen zu versehen. Der Kunststoff wird dabei derart angespritzt, dass Kunststoff diese Durchbrüche durchsetzt und über deren Flächen hinausreicht.

Zur Verbindung mehrerer Blechteile zu einem gemeinsamen Bauteil sind eine Vielzahl von Fügetechniken, z. B. Schweißen, Löten, Nieten, etc. verbreitet. Eine an sich bekannte Fügetechnik zum Verbinden von Blechteilen ist insbesondere das so genannte Durchsetzfügen (auch als "Clinchen" bezeichnet). Hierunter wird eine Fügetechnik verstanden, bei der zwischen einem Stempel und einer mit diesem zusammenwirkenden Matrize ein Blechteil derart verformt wird, dass eine knopfartige Ausformung des Blechteils gebildet wird, die ein anliegendes weiteres Blechteil durchsetzt und zur formschlüssigen Verbindung der Blechteile hinterschneidet.

Es ist ferner, z. B. aus der DE 102 11 092 A1 bekannt, Hohlkörper, insbesondere Rohre, durch Druckbeaufschlagung eines den Innenraum des

Blechkörpers ausfüllenden Fluids zu verformen. Die DE-A-19918516 offenbart ein Verfahren und ein Werkzeug gemäß dem Oberbegriff der Ansprüche 1 und 4.

Der Erfindung liegt die Aufgabe zugrunde, ein besonders rationelles Verfahren anzugeben, das die Herstellung eines stabilen Hybridbauteils mit mindestens zwei Blechteilen und einem Kunststoffteil ermöglicht. Der Erfindung liegt weiterhin die Aufgabe zugrunde, ein Spritz- und Fügewerkzeug anzugeben, das zur Durchführung des oben genannten Verfahrens besonders geeignet ist.

Bezüglich des Verfahrens wird die Aufgabe erfindungsgemäß gelöst durch die Merkmale des Anspruchs 1. Danach werden das erste und das zweite Blechteil zumindest im Bereich einer vorgesehenen Fügestelle flächig aneinander angelegt. Hierauf wird das erste Blechteil an der vorgesehenen Fügestelle in Kontakt mit einer Kunststoffschmelze gebracht. Die Kunststoffschmelze wird unter Druck gesetzt, so dass sich unter Wirkung des durch die Kunststoffschmelze auf das erste Blechteil übertragenen hydrostatischen Drucks an der Fügestelle eine knopfartige Ausformung des ersten Blechteils ausbildet, die das zweite Blechteil durchsetzt und zur Herstellung einer formschlüssigen Verbindung hinterschneidet. Die Kunststoffschmelze wird anschließend zumindest im Bereich der Ausformung des ersten Blechteils zur Erstarrung gebracht.

Das erfindungsgemäße Verfahren kombiniert somit Eigenheiten eines Spritzgussverfahrens, eines Hydroformingverfahrens und eines Durchsetzfügeverfahrens unter synergetischer Nutzung der jeweiligen Vorteile dieser Verfahren. Die Fügung der beiden Blechteile im fertigen Hybridbauteil ähnelt insbesondere einer herkömmlichen Durchsetzfügeverbindung. Sie weist dadurch sämtliche Vorteile auf, die eine derartige Verbindung gegenüber anderen Fügetechniken, z. B. einer Schweiß- oder Nietverbindung, auszeichnet. Insbesondere ist die erfindungsgemäße Fügeverbindung der Blechteile besonders materialschonend und korrosionsbeständig, zumal die Blechoberflächen im Fügeprozess nicht zerstört werden. Zudem ist die Dichtheit des Hybridbauteils an der Fügestelle gewährleistet, da das Material zumindest des ersten Blechteils im Fügeprozess nicht durchbrochen wird. Die Fügestelle weist auch, wie eine herkömmliche Durchsetzfügung, eine hohe Stabilität sowohl im Bezug auf Scherung als auch auf Kopfzug auf.

Das erfindungsgemäße Verfahren hat darüber hinaus gegenüber einer herkömmlichen Durchsetzfügung den Vorteil, dass durch die Kunststoffschmelze der Verformungsdruck gleichmäßig auf das Material des ersten Blechteils übertragen wird. Hierdurch wird eine besonders geringe Materialbelastung des Blechteils erzielt und das Risiko einer Bruchstelle oder einer Oberflächenverletzung reduziert, wodurch die Stabilität und die Korrosionsbeständigkeit der Fügestelle weiter verbessert werden. Zur Verbesserung der Korrosionsbeständigkeit trägt auch der Umstand bei, dass der Innenraum der Ausformung des ersten Blechteils durch die erstarrte Kunststoffschmelze versiegelt wird. Hierdurch wird beispielsweise verhindert, dass sich im Innenraum der Ausformung Wasser ansammeln kann, das eine verstärkte Korrosion auslösen könnte. Das erfindungsgemäße Verfahren ist schließlich ein effektives Spritzgussverfahren, mit welchem ein Kunststoffteil besonders stabil mit den Blechteilen des Hybridbauteils verbindbar ist.

In bevorzugter Ausführung des Verfahrens wird vor dem Anspritzen des Kunststoffteils an der vorgesehenen Fügestelle ein Durchbruch in das zweite Blechteil eingebracht. Werden die Blechteile im Zuge des Fügeprozesses aneinander angelegt, so ist die Gesamtstärke des Blechmaterials im Bereich des Durchbruches besonders gering. Der Durchbruch des zweiten Blechteils definiert somit eine Sollbiegestelle, an der sich das erste Blechteil unter dem Druck der Kunststoffschmelze bevorzugt verbiegt. Durch Einbringung des Durchbruchs in das zweite Blechteil kann somit die Fügestelle sehr präzise vorherbestimmt werden. Zur weiteren Verbesserung dieses Effekts ist insbesondere das zweite Blechteil stärker ausgebildet als das erste Blechteil. Alternativ ist jedoch auch denkbar, dass das zweite Blechteil wie beim herkömmlichen Durchsetzfügen ungelocht herangezogen wird und beide Blechteile unter dem Druck der Kunststoffschmelze gemeinsam verformt werden.

Die Verformung des ersten Blechteils erfolgt insbesondere bei sehr dünner Blechstärke unter Einfluss des gewöhnlichen Spritzdruckes der Kunststoffschmelze. Insbesondere, wenn der Spritzdruck der Kunststoffschmelze an sich nicht zur Verformung des Blechteils ausreichen würde, ist in der Erfindung vorgesehen, zusätzlichen Druck durch einen verschiebbaren Druckstempel auf die Kunststoffschmelze auszuüben. Ein solcher Druckstempel ist erfindungsgemäß derart angeordnet, dass bei seiner Verschiebung von einer Ruhestellung in eine Belastungsstellung ein Einspritzkanal für die Kunststoffschmelze durch den Druckstempel verschlossen wird. Durch den Druckstempel wird somit ein vorgegebenes Volumen an Kunststoffschmelze isoliert, auf welches bei weiterer Verschiebung des Druckstempels ein besonders hoher Druck appliziert werden kann.

Bezüglich eines zur Durchführung des vorstehend beschriebenen Verfahrens besonders geeigneten Spritz- und Fügewerkzeugs wird die Aufgabe erfindungsgemäß gelöst durch die Merkmale des Anspruchs 4. Danach umfasst das Spritz- und Fügewerkzeug ein erstes Halbstück und ein zweites Halbstück, zwischen welche die Blechteile des herzustellenden Hybridbauteils derart einlegbar sind, dass sie im Inneren des Werkzeugs zumindest im Bereich einer vorgesehenen Fügestelle flächig aneinander anliegen. Dabei ist die Innenseite des ersten Halbstücks, die zur Anlage an dem ersten Blechteil vorgesehen ist, mit einem Hohlraum versehen. Dieser Hohlraum bildet eine Gussform für Kunststoff, der an das anliegende erste Blechteil anzuspritzen ist. Die zur Anlage an dem zweiten Blechteil vorgesehene Innenseite des zweiten Halbstücks trägt eine Aussparung zur Aufnahme und Formgebung der im Zuge des Fügeprozesses gebildeten knopfartigen Ausformung des ersten Blechteils. Das zweite Halbstück, und insbesondere dessen Aussparung, dient somit bei der Umformung des ersten Blechteils als Matrize. Weiterhin ist das Spritz- und Fügewerkzeug mit Mitteln versehen, die das Einspritzen einer Kunststoffschmelze in die Gussform und die Druckbelastung dieser Kunststoffschmelze in der Gussform ermöglichen.

Diese letztgenannten Mittel umfassen einen Einspritzkanal, über welchen die Kunststoffschmelze in die Gussform eingebracht werden kann. Über diesen Einspritzkanal kann auch ein extern erzeugter Einspritzdruck auf die in der Gussform angesammelte Kunststoffschmelze übertragen werden.

Zusätzlich umfassen die Mittel zur Einspritzung und Druckbelastung der Kunststoffschmelze einen verschiebbaren Druckstempel, mittels welchem die Kunststoffschmelze in der Gussform druckbelastet werden kann. Für eine gute Druckübertragung ist es hierbei vorteilhaft, den Druckstempel nahe an der Gussform anzuordnen. Dies wird insbesondere dadurch erreicht, dass der Druckstempel zumindest einen Teil der Wand der Gussform bildet. Der Druckstempel kann insbesondere auch zumindest partiell längs des Einspritzkanals geführt sein.

Vorteilhafterweise ist die matrizenartige Aussparung des zweiten Halbstücks zumindest teilweise breiter als die vorgesehene Fügestelle dimensioniert. Hierdurch wird auf einfache Weise sichergestellt, dass im Zuge des Fügeprozesses die Ausformung des ersten Blechteils um das zweite Blechteil herumfließt und dieses hinterschneidet. Hierdurch wird eine in Bezug auf Scher- und Kopfzugkräfte besonders stabile Verfügung der beiden Blechteile erzielt.

Nachfolgend werden Ausführungsbeispiele der Erfindung näher erläutert. Darin zeigen:
- Fig. 1: in einem schematischen Querschnitt ein nicht-erfindungsgemäßes Spritz- und Fügewerkzeug zur Herstellung eines Hybridbauteils mit zwei darin eingelegten Blechteilen,
- Fig. 2 und 3: das nicht-erfindungsgemäße Spritz- und Fügewerkzeug gemäß Fig. 1 zu aufeinander folgenden Prozesszeitpunkten bei der Herstellung des Hybridbauteils,
- Fig. 4: in einem schematischen Querschnitt das mittels des nicht-erfindungsgemäßen Spritz- und Fügewerkzeugs gemäß Fig. 1 hergestellte Hybridbauteil,
- Fig. 5 bis 7: in Darstellung gemäß den Fig. 1 bis 3 eine erfindungsgemäße Ausführungsform des Spritz- und Fügewerkzeugs,
- Fig. 8: in Darstellung gemäß Fig. 4 das durch das Spritz- und Fügewerkzeug gemäß Fig. 5 hergestellte Hybridbauteil,
- Fig. 9 bis 11: in Darstellung gemäß den Fig. 1 bis 3 eine weitere erfindungsgemäße Ausführungsform des Spritz- und Fügewerkzeugs,
- Fig. 12: in einem schematischen Querschnitt das durch das Spritz- und Fügewerkzeug gemäß Fig. 9 hergestellte Hybridbauteil, und
- Fig. 13 bis 14: weitere alternative Ausführungsformen eines erfindungsgemäßen Spritz- und Fügewerkzeugs.

Einander entsprechende Teile und Größen sind in den Figuren stets mit den gleichen Bezugszeichen versehen.

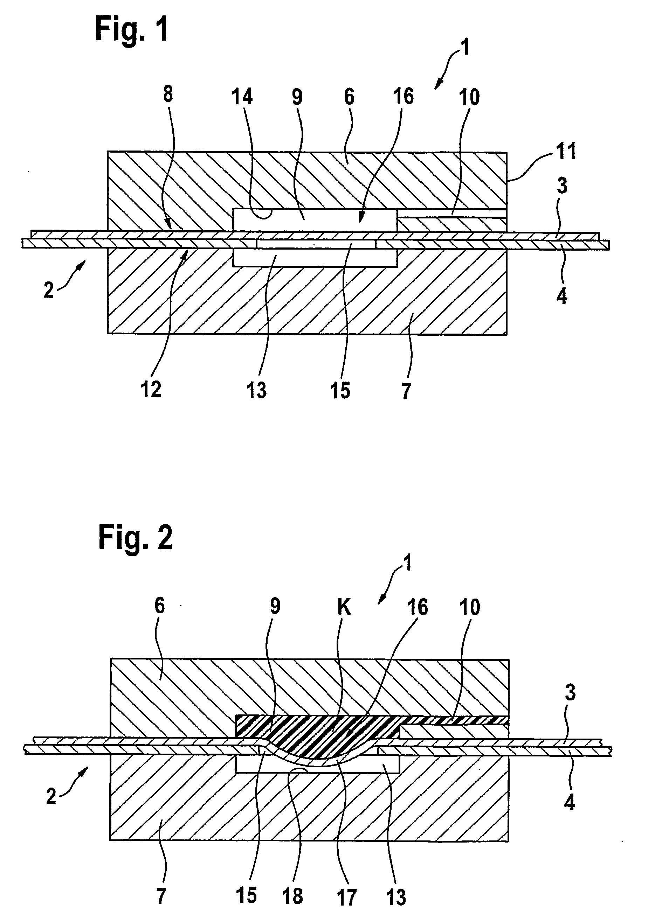

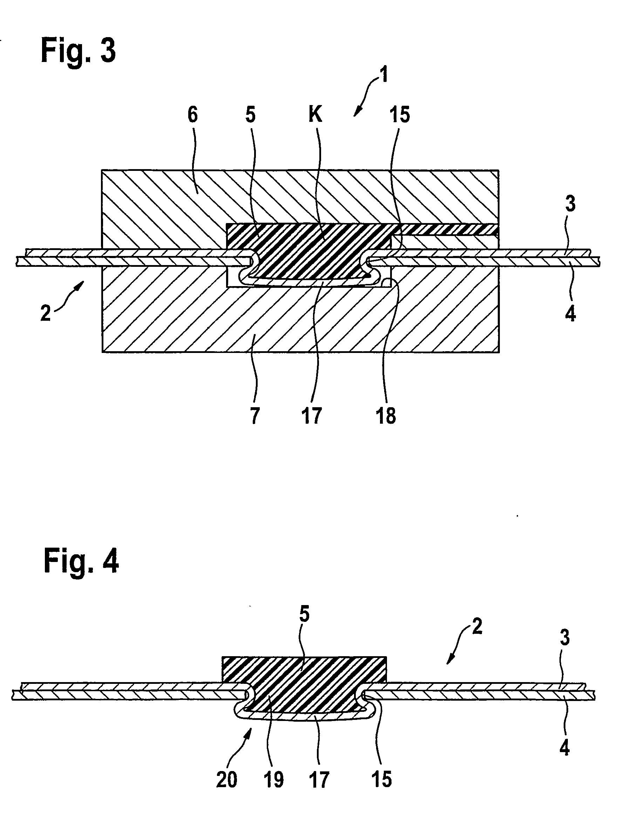

Fig. 1 zeigt ein Spritz- und Fügewerkzeug 1 zur Herstellung eines Hybridbauteils 2. Das Hybridbauteil 2, das in Fig. 4 in seinem fertigen Zustand gezeigt ist, umfasst ein erstes Blechteil 3, ein zweites Blechteil 4 sowie ein im Zuge des Herstellungsverfahrens anzuspritzendes Kunststoffteil 5 (Fig. 4).

Das Spritz- und Fügewerkzeug 1 umfasst ein erstes Halbstück 6 und ein zweites Halbstück 7, die jeweils schalenartig aufgebaut sind. Das erste Halbstück 6 ist dabei an einer Innenseite 8 mit einer Vertiefung versehen, die zur Aufnahme einer Kunststoffschmelze K (Fig. 2) bestimmt und nachfolgend als Gussform 9 bezeichnet ist. Die Gussform 9 ist durch einen Einspritzkanal 10 mit der Außenseite 11 des Spritz- und Fügewerkzeugs 1 verbunden.

Das zweite Halbstück 7 ist an seiner Innenseite 12 mit einer Aussparung 13 versehen, die als Matrize für das im Zuge des Herstellungsverfahrens des Hybridbauteils 2 umgeformte Blechteil 3 dient.

Zur Herstellung des Hybridbauteils 2 werden gemäß Fig. 1 die Halbstücke 6 und 7 mit ihren jeweiligen Innenseiten 8 bzw. 12 aneinandergelegt, wobei die Blechteile 3 und 4 zwischen die Halbstücke 6 und 7 eingelegt werden, so dass das erste Blechteil 3 an der Innenseite 8 des ersten Halbstücks 6 anliegt und das zweite Blechteil 4 an der Innenseite 12 des zweiten Halbstücks 7 anliegt. Die Halbstücke 6 und 7 sind dabei derart konstruiert, dass die Wand 14 der Gussform 9 zusammen mit dem anliegenden Blechteil 3 einen abgedichteten Druckraum für die Kunststoffschmelze K bildet. Die Halbstücke 6 und 7 sind weiterhin so ausgebildet, dass die Aussparung 13 etwa fluchtend mit der Gussform 9 angeordnet ist, und dass die Blechteile 3 und 4 im Bereich der Gussform 9 und der gegenüberliegenden Aussparung 13 flächig aneinander anliegen.

In das zweite Blechteil 4 ist ein Durchbruch 15 eingebracht, der bei in das Spritz- und Fügewerkzeug 1 eingelegtem Blechteil 4 innerhalb des durch die Aussparung 13 und die Gussform 9 gebildeten Hohlraums liegt. Der Durchbruch 15 ist wahlweise punktartig oder nahtartig langgestreckt ausgebildet.

Bei aneinander angelegten Blechteilen 3 und 4 ist die Gesamtblechstärke im Bereich des Durchbruchs 15 geschwächt. Der Durchbruch 15 definiert hierdurch durch seine Form eine Fügestelle 16, an der im Zuge des nachfolgend beschriebenen Herstellungsverfahrens eine Umformung des ersten Blechteils 3 erfolgt.

Nach dem Einlegen der Blechteile 3 und 4 in das Spritz- und Fügewerkzeug 1 wird gemäß Fig. 2 die Kunststoffschmelze K durch den Einspritzkanal 10 in die Gussform 9 eingeleitet. Sobald der durch die Gussform 9 und das erste Blechteil 3 begrenzte Raum mit der Kunststoffschmelze K gefüllt ist; baut sich infolge des Einspritzdrucks der Kunststoffschmelze K im Inneren der Gussform 9 ein hydrostatischer Druck auf, der das Blechteil 3 in Richtung des Blechteils 4 belastet. Unter Wirkung dieses hydrostatischen Drucks wird das Blechteil 3 im Bereich des Durchbruchs 15 ausgebogen. Es bildet sich somit eine zunächst beulenförmige Ausformung 17 des ersten Blechteils 3, die das zweite Blechteil 4 durchsetzt. Bei kontinuierlicher Nachförderung der Kunststoffschmelze K wächst die Ausformung 17 zunächst in Richtung des Bodens 18 der Aussparung 13.

Nachdem die Ausformung 17 am Boden 18 zur Anlage gekommen ist, wächst sie gemäß Fig. 3 unter dem kontinuierlich fortdauernden Druck der Kunststoffschmelze K in lateraler Richtung, d.h. parallel zur Ebene der Blechteile 3 und 4 weiter. Hierbei nimmt die Ausformung 17 eine etwa knopfartige Form an, dank derer die Ausformung 17 um die Ränder des Durchbruchs 15 herumgreift. Das erste Blechteil 3 hinterschneidet also das zweite Blechteil 4 und ist somit formschlüssig mit diesem verbunden. Sobald der Fügeprozess der Blechteile 3 und 4 abgeschlossen ist, wird analog zu einem herkömmlichen Spritzgussverfahren die in der Gussform 9 befindliche Kunststoffschmelze K zur Erstarrung gebracht, wodurch das Kunststoffteil 5 gebildet wird. Die Halbstücke 6 und 7 werden anschließend voneinander entfernt und das in Fig. 4 in fertigem Zustand gezeigte Hybridbauteil 2 ausgeworfen.

Wie insbesondere in Fig. 4 zu erkennen ist, füllt das Kunststoffteil 5 den hohlen Innenraum 19 der Ausformung 17 aus. Dank der sich zum Freiende 20 der Ausformung 17 hin aufweitenden Form des Innenraums 19 hinterschneidet das Kunststoffteil 5 wiederum das erste Blechteil 3 und ist somit formschlüssig und damit besonders stabil mit dem ersten Blechteil 3 verbunden. Die Blechteile 3 und 4 sowie das Kunststoffteil 5 bilden somit eine fest zusammenhängende Einheit, die hinsichtlich ihrer Stabilität und Elastizität die vorteilhaften Eigenschaften einer Blech-Blech-Verbindung aufweist, wobei das Kunststoffteil 5 diese Verbindung bei nur vergleichsweise geringem Gewichtszuwachs zusätzlich stabilisiert. Bevorzugt wird im Zuge des Fügeprozesses im Wesentlichen nur das erste Blechteil 3 umgeformt, während das zweite Blechteil 4 im Wesentlichen seine Form behält. Dieses Ziel wird in guter Näherung dadurch erreicht, dass das zweite Blechteil 4 stärker ausgelegt ist als das erste Blechteil 3 und/oder aus einem härteren Material hergestellt ist. Die Form des Kunststoffteils 5 kann durch entsprechende Formgebung der Gussform 9 auf einfache Weise beliebig bedarfsangepasst gestaltet werden.

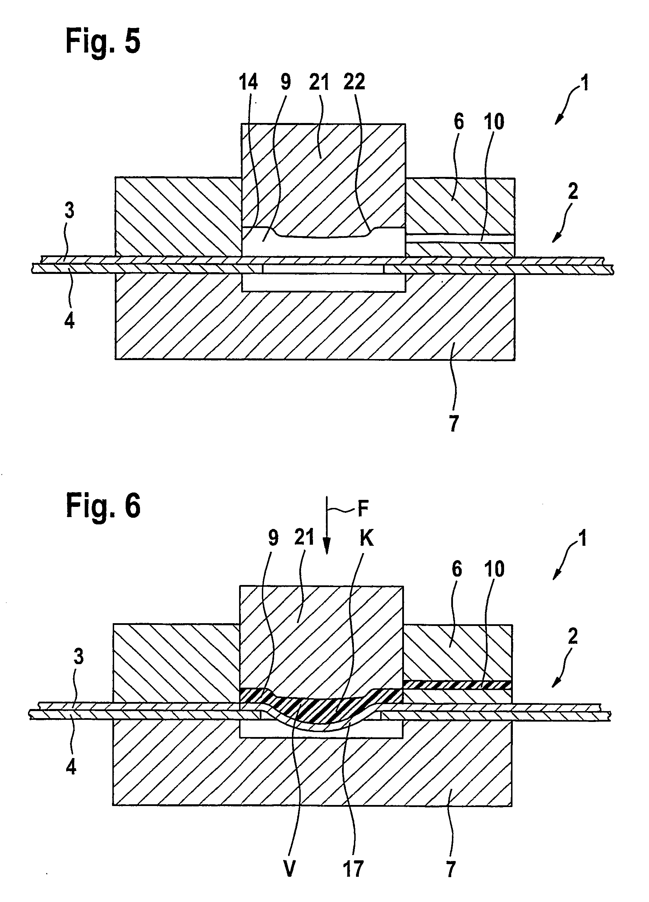

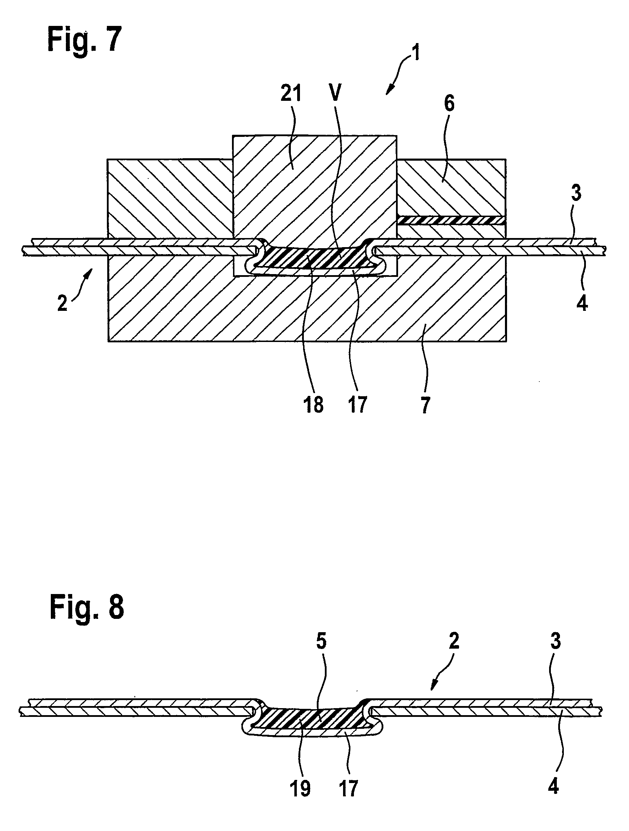

Die Fig. 5 bis 7 zeigen eine alternative Ausführung des Spritz- und Fügewerkzeugs 1 bei der Herstellung eines geringfügig modifizierten Hybridbauteils 2, das in fertigem Zustand in Fig. 8 dargestellt ist. Der Aufbau des in den Fig. 5 bis 7 dargestellten Spritz- und Fügewerkzeugs 1 entspricht weitgehend dem der vorstehend im Zusammenhang mit Fig. 1 beschriebenen Ausführungsform. Im Gegensatz zu dort umfasst das erste Halbstück 6 jedoch einen Druckstempel 21, der die Decke 22, und damit einen Teil der Wand 14 der Gussform 9 bildet und senkrecht zur Ebene der Blechteile 3 und 4 verschiebbar ist.

Zur Herstellung des Hybridbauteils 2 wird gemäß Fig. 6 wiederum die Kunststoffschmelze K durch den Einspritzkanal 10 in die Gussform 9 eingeleitet. Danach wird der Druckstempel 21 mit einer in Richtung des zweiten Halbstücks 7 wirkenden Kraft F belastet. Hierdurch wird auf die Kunststoffschmelze K ein Druck ausgeübt, der den gewöhnlichen Einspritzdruck der Kunststoffschmelze K, insbesondere um ein Vielfaches, übersteigt.

Unter Wirkung dieses Drucks kommt es in der vorbeschriebenen Weise wiederum zur Ausbildung der Ausformung 17 des ersten Blechteils 3, die sich hinter dem Blechteil 4 verkrallt. Im Zuge des Fügeprozesses wird der Druckstempel 21 aus seiner in Fig. 5 gezeigten Ruhestellung sukzessive in die in Fig. 7 gezeigte Belastungsstellung verfahren. Dabei wird, wie in Fig. 6 gezeigt, der Einspritzkanal 10 durch den Druckstempel 21 verschlossen. Es wird also in der Gussform 9 und dem Innenraum 19 der Ausformung 17 ein Kunststoffvolumen V isoliert. Dies erlaubt insbesondere die Applikation besonders hoher Drücke auf die im Kunststoffvolumen V enthaltene Kunststoffschmelze K, ohne dass ein Teil der Kunststoffschmelze K durch den Einspritzkanal 10 zurückgedrückt würde. Außerdem wird durch den Abschluss des Einspritzkanals 10 ein störender Anspritzgrat von vornherein vermieden.

In der Ausführung gemäß den Fig. 5 bis 7 ist der Druckstempel 21 mit einem auf das Blechteil 3 hin ausgewölbten Profil versehen. Mit diesem Profil greift der Druckstempel in der in Fig. 7 gezeigten Belastungsstellung in den Innenraum 19 der Ausformung 17 ein. Damit kann bei Bedarf erreicht werden, dass das durch Erstarrung der Kunststoffschmelze K gebildete Kunststoffteil 5 den Innenraum 19 der Ausformung 17 nur partiell ausfüllt und insbesondere nicht über die Oberfläche des ersten Blechteils 3 hervorsteht. Mittels geeigneter Wahl der Profilform des Druckstempels und der Form der Ausformung 17, lässt sich die Hinterschneidung der Blechteile 3 und 4 beeinflussen. Durch verstärktes radiales oder laterales Fließen der Kunststoffschmelze K, kann die Hinterschneidung des durch Erstarrung der Schmelze K gebildeten Kunststoffteils 5 und dem Blechteil 3 vergrößert werden, was zu einer besseren Verkrallung der Blechteile 3 und 4 beiträgt.

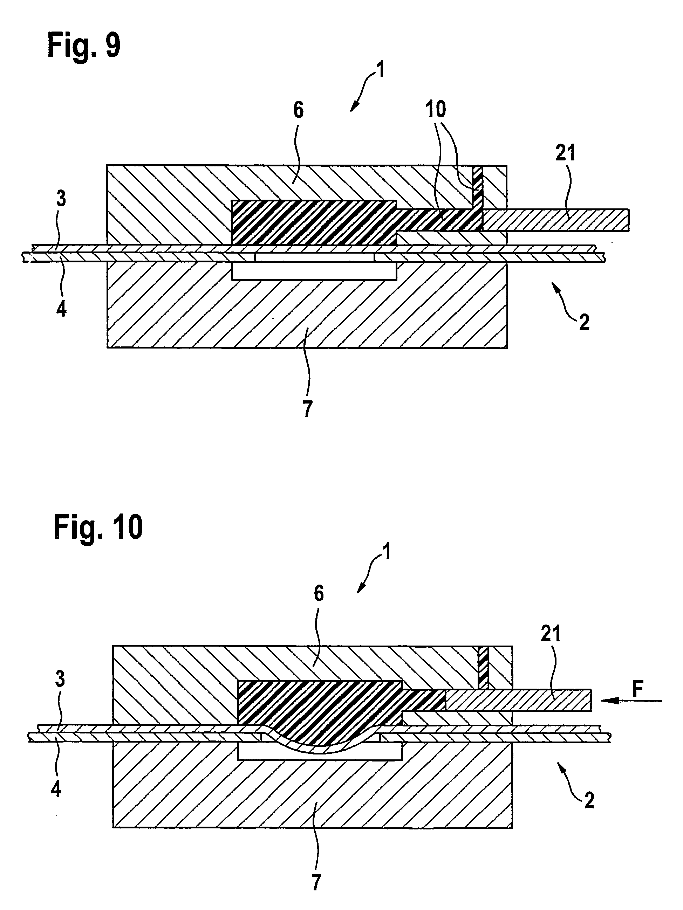

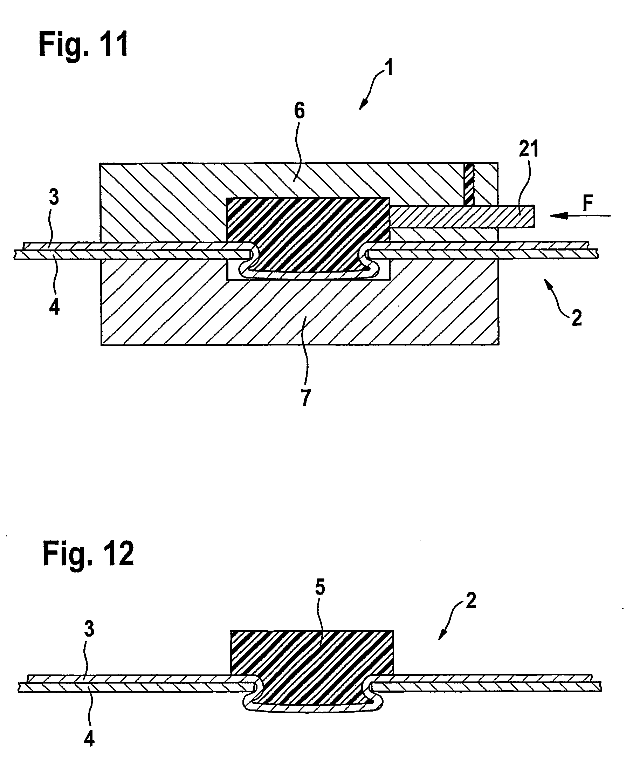

Es ist für die Funktionsfähigkeit des Spritz- und Fügewerkzeugs 1 prinzipiell unerheblich, in welche Richtung die Kraftwirkung des Druckstempels 21 gerichtet ist. Dies ist anhand einer in den Fig. 9 bis 11 dargestellten weiteren Ausführungsform des Spritz- und Fügewerkzeugs 1 demonstriert. Der Aufbau dieser Ausführungsform entspricht wiederum weitgehend dem Aufbau der in Fig. 5 gezeigten Ausführungsform. Ebenso erfolgt die Herstellung des durch das Spritz- und Fügewerkzeug 1 gemäß Fig. 9 hergestellten Hybridbauteils 2, das in fertigem Zustand in Fig. 12 gezeigt ist, auf die vorstehend beschriebene Weise.

Im Unterschied zu der Ausführungsform gemäß, Fig. 5 ist bei dem in Fig. 9 gezeigten Ausführungsbeispiel der Druckstempel 21 partiell entlang des Einspritzkanals 10 geführt und etwa parallel zur Ebene der Blechteile 3 und 4 verschiebbar. Der Einspritzkanal 10 ist in der in Fig. 9 dargestellten Ausführung L-förmig gewinkelt und wird wiederum bei Verschiebung des Druckstempels 21 von der in Fig. 9 gezeigten Ruhestellung in die in Fig. 11 gezeigte Belastungsstellung durch den Druckstempel 21 verschlossen.

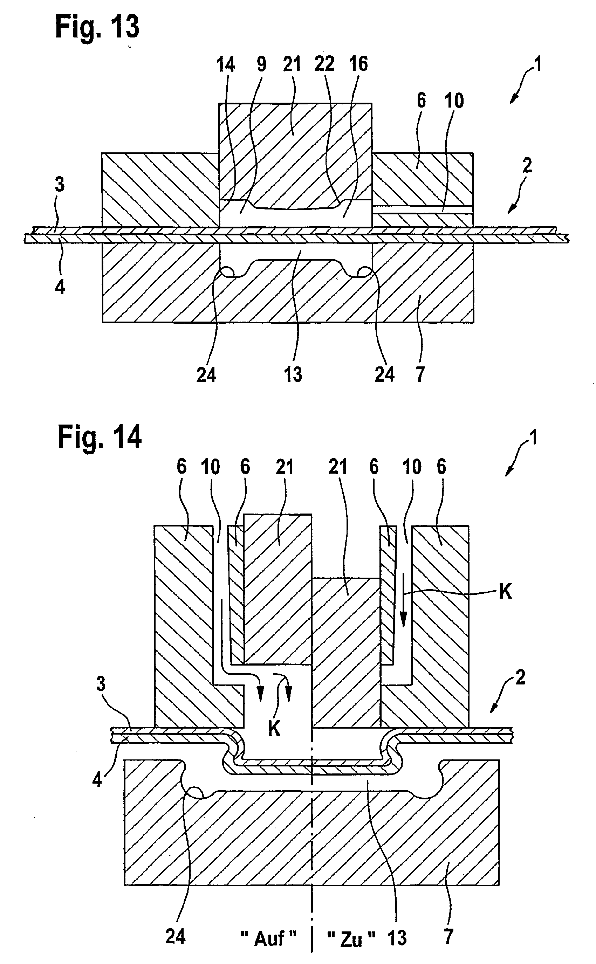

Im Unterschied zu den oben beschriebenen Ausführungsformen für ein Spritz- und Fügewerkzeug 1 weist das in Figur 13 dargestellte Spritz- und Fügewerkzeug 1 ein zweites Halbstück 7 auf, welches im Bereich der Aussparung 13 mit Freisparungen 24 versehen ist. Eine derartige Ausführungsform des Spritz- und Fügewerkzeugs 1 ermöglicht eine Umformung auch von ungelochten Blechteilen 3 und 4. Dabei werden das erste und das zweite Blechteil 3 bzw. 4 an der Fügestelle 16 unter dem Druck der Kunststoffschmelze K gemeinsam verformt.

In Figur 14 ist eine weitere alternative Ausführungsform für ein Spritz- und Fügewerkzeug 1 dargestellt, welches einen Druckstempel 21 zur mechanischen Druckerhöhung aufweist. Auf der linken Seite der Figur 14 ist dabei eine Stellung "Auf" und auf der rechten Seite der Figur 14 eine Stellung "Zu" des Fügewerkzeugs 1 dargestellt. Durch separates Führen der einzelnen Druckstempel 21 kann der jeweilige Einspritzkanal 10 zum Zuführen der Kunststoffschmelze K teilweise oder vollständig geöffnet bzw. geschlossen werden. Alternativ oder zusätzlich können die jeweiligen Druckstempel 21 hohl ausgebildet sein. In diesem Fall dienen die Druckstempel 21 auch als Einspritzkanal 10 für die Kunststoffschmelze K.

### Bezugszeichenliste

- 1: Spritz- und Fügewerkzeug
- 2: Hybridbauteil
- 3: (erstes) Blechteil
- 4: (zweites) Blechteil
- 5: Kunststoffteil
- 6: (erstes) Halbstück
- 7: (zweites) Halbstück
- 8: Innenseite
- 9: Gussform
- 10: Einspritzkanal
- 11: Außenseite
- 12: Innenseite
- 13: Aussparung
- 14: Wand
- 15: Durchbruch
- 16: Fügestelle
- 17: Ausformung
- 18: Boden
- 19: Innenraum
- 20: Freiende
- 21: Druckstempel
- 22: Decke
- 24: Hinterschnitt

- K: Kunststoffschmelze
- F: Kraft
- V: Kunststoffvolumen

## Patentansprüche

1. Verfahren zur Herstellung eines Hybridbauteils (2), bei welchem ein erstes Blechteil (3) und ein zweites Blechteil (4) zumindest im Bereich einer vorgesehenen Fügestelle (16) flächig aneinander angelegt werden, bei welchem das erste Blechteil (3) an der vorgesehenen Fügestelle (16) in Kontakt mit einer Kunststoffschmelze (K) gebracht wird, bei welchem das erste Blechteil (3) durch Druckbelastung der Kunststoffschmelze (K) derart verformt wird, dass an der Fügestelle (16) eine knopfartige Ausformung (17) des ersten Blechteils (3) gebildet wird, die das zweite Blechteil (4) durchsetzt und zur Herstellung einer formschlüssigen Verbindung nach Art einer Hinterschneidung umgreift, und bei welchem die Kunststoffschmelze (K) zumindest im Bereich der Ausformung (17) zur Erstarrung gebracht wird,
**dadurch gekennzeichnet,**
**dass** die Kunststoffschmelze (K) durch einen verschiebbaren Druckstempel (21) druckbelastet und bei Verschiebung des Druckstempels (21) zwischen einer Ruhestellung und einer Belastungsstellung ein Einspritzkanal (10) für die Kunststoffschmelze (K) durch den Druckstempel (21) verschlossen wird.

2. Verfahren nach Anspruch 1,
**dadurch gekennzeichnet,**
**dass** an der vorgesehenen Fügestelle (16) ein Durchbruch (15) in das zweite Blechteil (4) eingebracht wird.

3. Verfahren nach Anspruch 1,
**dadurch gekennzeichnet,**
**dass** an der vorgesehenen Fügestelle (16) das erste Blechteil (3) und das zweite Blechteil (4) ungelocht ausgebildet sind und beide Blechteile (3, 4) unter dem Druck der Kunststoffschmelze (K) gemeinsam verformt werden.

4. Spritz- und Fügewerkzeug (1) zur Herstellung eines ein erstes Blechteil (3), ein zweites Blechteil (4) sowie ein Kunststoffteil (5) umfassenden Hybridbauteils (2), mit einem ersten Halbstück (6) und einem zweiten Halbstück (7), zwischen welche die Blechteile (3, 4) derart einlegbar sind, dass sie zumindest im Bereich einer vorgesehenen Fügestelle (16) flächig aneinander anliegen, wobei die zur Anlage an dem ersten Blechteil (3) vorgesehene Innenseite (8) des ersten Halbstücks (6) mit einer Gussform (9) zur Aufnahme einer Kunststoffschmelze (K) versehen ist, wobei die zur Anlage an dem zweiten Blechteil (4) vorgesehene Innenseite (12) des zweiten Halbstücks (7) eine Aussparung (13) zur Aufnahme und Formgebung einer knopfartigen Ausformung (17) des ersten Blechteils (3) aufweist und wobei Mittel (10, 21) zur Einspritzung und Druckbelastung der Kunststoffschmelze (K) vorgesehen sind, die einen in die Gussform (9) mündenden Einspritzkanal (10) umfassen,
**dadurch gekennzeichnet,**
**dass** die Mittel zur Einspritzung und Druckbelastung der Kunststoffschmelze (K) einen verschiebbaren Druckstempel (21) umfassen und der Druckstempel (21) und der Einspritzkanal (10) derart zueinander angeordnet sind, dass bei Verschiebung des Druckstempels (21) zwischen einer Ruhestellung und einer Belastungsstellung der Einspritzkanal (10) für die Kunststoffschmelze (K) durch den Druckstempel (21) verschlossen wird.

5. Spritz- und Fügewerkzeug (1) nach Anspruch 4,
**dadurch gekennzeichnet,**
**dass** der Druckstempel (21) zumindest einen Teil der Wand (14) der Gussform (9) bildet.

6. Spritz- und Fügewerkzeug (1) nach einem der Ansprüche 4 bis 5,
**dadurch gekennzeichnet,**
**dass** die Aussparung (13) des zweiten Halbstücks (7) zumindest partiell breiter als die vorgesehene Fügestelle (16) dimensioniert ist.

## Claims

1. Method for the production of a hybrid component (2), wherein a first sheet metal part (3) and a second sheet metal part (4) are placed flat against one another at least in the region of a planned joint location (16), wherein the first sheet metal part (3) is brought into contact with a plastic melt (K) at the planned joint location (16), wherein the first sheet metal part (3) is by pressure-loading of the plastic melt (K) deformed thus that a button-like shape (17) of the first sheet metal part (3) is produced at the joint location (16), which forms a double bend in the second sheet metal part (4) and embraces it in the manner of an undercut to produce a positive joint, and wherein the plastic melt (K) is made to solidify at least in the region of the shape (17),
**characterised in that**
the plastic melt (K) is pressure-loaded by a movable plunger (21) and **in that**, as the plunger (21) is moved between an inactive position and a loading position, an injection passage (10) for the plastic melt (K) is blocked by the plunger (21).

2. Method according to claim 1,
**characterised in that**
an opening (15) is produced in the second sheet metal part (4) at the planned joint location (16).

3. Method according to claim 1,
**characterised in that**
the first sheet metal part (3) and the second sheet metal part (4) are unperforated at the planned joint location (16) and the two sheet metal parts (3, 4) are deformed together under the pressure of the plastic melt (K).

4. Injection and joining tool (1) for the production of a hybrid component (2) comprising a first sheet metal part (3), a second sheet metal part (4) and a plastic part (5), with a first half (6) and a second half (7), between which the sheet metal parts (3, 4) can be placed such that they lie flat against one another at least in the region of a planned joint location (16), wherein the inside (8) of the first half (6), which bears against the first sheet metal part (3), is provided with a mould (9) for the accommodation of a plastic melt (K), wherein the inside (12) of the second half (7), which bears against the second sheet metal part (4), is provided with a recess (13) for the accommodation and forming of a button-like shape (17) of the first sheet metal part (3), and wherein means (10, 21) including an injection passage (10) terminating in the mould (9) are provided for the injection and pressure-loading of the plastic melt (K),
**characterised in that**
the means for the injection and pressure-loading of the plastic melt (K) include a movable plunger (21) and **in that** the plunger (21) and the injection passage (10) are so arranged relative to one another that, as the plunger (21) is moved between an inactive position and a loading position, the injection passage (10) for the plastic melt (K) is blocked by the plunger (21).

5. Injection and joining tool (1) according to claim 4,
**characterised in that**
the plunger (21) represents at least a part of the wall (14) of the mould (9).

6. Injection and joining tool (1) according to any of claims 4 to 5
**characterised in that**
the recess (13) of the second half (7) is at least partially dimensioned wider than the planned joint location (16).

## Revendications

1. Procédé permettant la fabrication d'une pièce de structure hybride (2), au cours duquel une première pièce en tôle (3) et une seconde pièce en tôle (4) sont appliquées en surface l'une contre l'autre, au moins dans la zone d'un point d'assemblage prévu (16), procédé au cours duquel la première pièce en tôle (3) est, au niveau du point d'assemblage prévu (16), placée en contact avec un bain de matière plastique (K), procédé au cours duquel la première pièce en tôle (3) est, sous l'effet de la charge de compression du bain de matière plastique (K), déformée de manière telle, qu'une déformation (17) - en forme de bouton - de la première pièce en tôle (3) se produise au niveau du point d'assemblage (16), déformation qui traverse et enserre la seconde pièce en tôle (4) pour la réalisation d'un assemblage par sûreté de forme, à la façon d'une contre-dépouille, et procédé au cours duquel le bain de matière plastique (K) est porté à solidification au moins dans la zone de la déformation (17),
**caractérisé en ce que** le bain de matière plastique (K) est soumis à une charge de compression par un piston de compression mobile (21) et, lors du déplacement du piston de compression (21), entre une position de repos et une position de charge, un canal d'injection (10) prévu pour le bain de matière plastique (K) est obturé par le piston de compression (21).

2. Procédé selon la revendication 1, **caractérisé en ce qu'**une percée (15) est effectuée dans la seconde pièce en tôle (4), au niveau du point d'assemblage prévu (16).

3. Procédé selon la revendication 1, **caractérisé en ce que** la première pièce en tôle (3) et la seconde pièce en tôle (4) sont, au niveau du point d'assemblage prévu (16), configurées en étant non perforées, et les deux pièces en tôle (3, 4) sont déformées ensemble sous l'effet de pression du bain de matière plastique (K).

4. Outil d'injection et d'assemblage (1) permettant la fabrication d'une pièce de structure hybride (2) comprenant une première pièce en tôle (3), une seconde pièce en tôle (4) ainsi qu'une pièce en matière plastique (5), se composant d'une première demi-pièce (6) et d'une seconde demi-pièce (7) entre lesquelles les pièces en tôle (3, 4) peuvent être insérées de manière telle, qu'elles s'appliquent, en surface, l'une contre l'autre, au moins dans la zone d'un point d'assemblage prévu (16), où le côté intérieur (8) de la première demi-pièce (6), prévu pour l'application sur la première pièce en tôle (3), est doté d'un moule (9) servant à recevoir un bain de matière plastique (K), où le côté intérieur (12) de la seconde demi-pièce (7), prévu pour l'application sur la seconde pièce en tôle (4), présente un évidement (13) servant à recevoir et à façonner une déformation (17), en forme de bouton, de la première pièce en tôle (3) et où il est prévu des moyens (10, 21) servant à l'injection et à la charge de compression du bain de matière plastique (K), moyens qui comprennent un canal d'injection (10) débouchant dans le moule (9),
**caractérisé en ce que** les moyens prévus pour l'injection et la charge de compression du bain de matière plastique (K) comprennent un piston de compression mobile (21), et le piston de compression (21) et le canal d'injection (10) sont disposés l'un par rapport à l'autre, de manière telle qu'en cas de déplacement du piston de compression (21), entre une position de repos et une position de charge, le canal d'injection (10) prévu pour le bain de matière plastique (K) soit obturé par le piston de compression (21).

5. Outil d'injection et d'assemblage (1) selon la revendication 4, **caractérisé en ce que** le piston de compression (21) forme au moins une partie de la paroi (14) du moule (9).

6. Outil d'injection et d'assemblage (1) selon l'une ou l'autre des revendications 4 et 5, **caractérisé en ce que** l'évidement (13) de la seconde demi-pièce (7) est dimensionné en étant au moins partiellement plus large que le point d'assemblage prévu (16).
